**Europäisches Patentamt**

(19) **European Patent Office**

**Office européen des brevets**

(11) Veröffentlichungsnummer : **0 371 363 B1**

(12) **EUROPÄISCHE PATENTSCHRIFT**

(45) Veröffentlichungstag der Patentschrift :
01.04.92 Patentblatt 92/14

(51) Int. Cl.$^5$ : **B23K 11/14**

(21) Anmeldenummer : **89121416.5**

(22) Anmeldetag : **20.11.89**

(54) **Verfahren und Vorrichtung zum Aufbringen von Kontaktteilen auf Kontaktträgern.**

(30) Priorität : **01.12.88 DE 3840537**

(43) Veröffentlichungstag der Anmeldung :
**06.06.90 Patentblatt 90/23**

(45) Bekanntmachung des Hinweises auf die
Patenterteilung :
**01.04.92 Patentblatt 92/14**

(84) Benannte Vertragsstaaten :
**AT CH DE FR GB IT LI SE**

(56) Entgegenhaltungen :
**US-A- 2 979 599**
**US-A- 4 461 943**
**US-A- 4 465 913**
**US-A- 4 703 158**

(73) Patentinhaber : **SIEMENS
AKTIENGESELLSCHAFT
Wittelsbacherplatz 2
W-8000 München 2 (DE)**

(72) Erfinder : **Haan, Franz, Dipl.-Ing.(FH)
Josef-Heid-Strasse 11
W-7520 Bruchsal (DE)**

Jouve, 18, rue Saint-Denis, 75001 PARIS

## Beschreibung

Die Erfindung betrifft ein Verfahren und eine Vorrichtung zum Aufbringen von Kontaktteilen auf Kontaktträger mittels Widerstandsschweißen zwischen zusammengedrückten Ober- und Unterelektroden, wobei die Kontaktteile schweißseitig mit zwei im Abstand zueinander angeordneten Erhebungen wie Schweißwarzen, Schweißraupen oder Schweißrauten versehen sind.

Ein derartiges Verfahren und eine derartige Vorrichtung sind beispielsweise aus der DE Z Feinwerktechnik + Meßtechnik 91 (1983) 6, Seiten 255 bis 265 bekannt. Weitere Vorrichtungen zum Aufbringen von Kontaktteilen auf Kontaktträger mittels Widerstandsschweißen gehen aus der DE-A-16 52 833, der DE-A-28 09 190 und der DE-A-32 47 561 hervor.

Bei dem Aufschweißen von Kontaktteilen auf Kontaktträger sind auf den Kontaktteilen Schweißhilfen in Form von erhöhten Schweißwarzen, Schweißraupen oder Schweißrauten erforderlich. Bei dem Verschweißen werden diese Erhebungen abgeschmolzen und verbinden sich mit dem Kontaktträger. Je vollständiger diese Verschmelzung erfolgt, um so größer ist die Festigkeit der resultierenden Schweißverbindung. Als Schweißhilfen der Kontaktteile wurden bisher vorwiegend in Kontaktlängsrichtung durchgehende, mittige Schweißwarzen verwendet. Zur Verbesserung der Schweißfestigkeit werden heute jedoch vermehrt Kontakte mit zwei im Abstand zueinander in Längsrichtung verlaufenden Schweißwarzen verwendet. Hierbei besteht das Problem, daß mit den bisher bekannten Vorrichtungen zum Aufbringen der Kontaktteile auf Kontaktträger mittels Widerstandsschweißen keine gleichmäßige Verschweißung beider Schweißwarzen erreicht wird, weil über die dabei zum Einsatz kommenden Schweißelektroden kein gleich großer Anpreßdruck auf die beiden Schweißwarzen erreicht wird. Die Ursache liegt bei den Höhentoleranzen der Schweißwarzen, wobei eine Abweichung in wenigen Mikrometern bereits ein unterschiedliches Abschmelzen zur Folge hat. Eine weitere Ursache für schlechte Schweißungen ist die Schräglage des Kontaktmaterials unter der Oberelektrode, aber auch der unterschiedliche elektrische Übergangswiderstand zwischen der Oberelektrode und der Oberfläche des aufzuschweißenden Kontaktteiles.

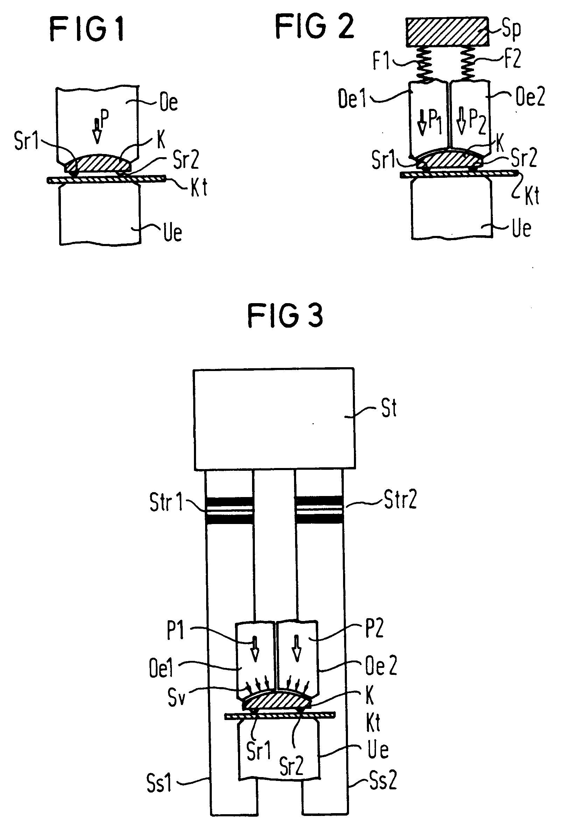

Fig. 1 zeigt in stark vereinfachter schematischer Darstellung die bei den bekannten Schweißverfahren auftretenden Schwierigkeiten. Zum Aufschweißen eines schweißseitig mit zwei im Abstand zueinander angeordneten Schweißraupen Sr1 und Sr2 versehenen Kontaktteiles K auf einen Kontaktträger Kt werden diese beiden Teile zwischen eine fest angeorndete Unterelektrode Ue und eine heb- und senkbare Oberelektrode Oe eingebracht. Anschließend wird die Oberelektrode Oe mit einer Elektrodenkraft P gegen die Unterelektrode Ue gedrückt und der für die Widerstandsschweißung erforderliche Schweißstrom zugeführt. Die Reibung zwischen Oberelektrode Oe und dem Kontaktteil K verhindert, daß sich die unterschiedlich hohen Schweißraupen Sr1 und Sr2 mit gleichem Anpreßdruck an den Kontaktträger anlegen. Neben der in Fig. 1 erkennbaren Schräglage des Kontaktteiles K unter der Oberelektrode Oe führt dann auch noch der bereits erwähnte unterschiedliche Übergangswiderstand zwischen der Oberelektrode Oe und der Oberfläche des Kontaktteiles K zu unbefriedigenden Schweißungen.

Der Erfindung liegt die Aufgabe zugrunde, ein Verfahren und eine Vorrichtung zum Aufbringen von Kontaktteilen auf Kontaktträger mittels Widerstandsschweißen zwischen zusammengedrückten Ober- und Unterelektroden zu schaffen, wobei die Kontaktteile schweißseitig mit zwei im Abstand zueinander angeordneten Erhebungen wie Schweißwarzen, Schweißraupen oder Schweißrauten versehen sind und diese Erhebungen möglichst vollständig mit dem Kontaktträger verschmelzen sollen.

Diese Aufgabe wird bei einem gattungsgemäßen Verfahren dadurch gelöst, daß jede der beiden Erhebungen mit einer zugeordneten Oberelektrode gleich stark gegen den Kontaktträger gedrückt wird und daß der Schweißstrom den beiden Oberelektroden getrennt und ohne gegenseitige Beeinflussung zugeführt wird.

Bei einer gattungsgemäßen Vorrichtung wird die der Erfindung zugrundeliegende Aufgabe dadurch gelöst, daß der Unterelektrode zwei eng beeinander geführte Oberelektroden gegenüberstehen, daß beide Oberelektroden mit einer gleich großen Elektrodenkraft beaufschlagbar sind und daß jeder Oberelektrode eine separate Schweißstromzuführung zugeordnet ist.

Der Erfindung liegt die Erkenntnis zugrunde, daß durch den Einsatz von zwei eng beeinander geführten Oberelektroden anstelle einer einzigen Oberelektrode die beiden Erhebungen auf der Unterseite des aufzuschweißenden Kontaktteiles gleich stark an den Kontaktträger angedrückt werden können. Eine Schräglage des Kontaktteiles beim Schweißvorgang wird hierdurch vermieden. Außerdem werden eventuell bestehende Höhentoleranzen der beiden Erhebungen eliminiert. Zusätzlich erhalten die beiden Oberelektroden getrennte Stromzuführungen in der Form, daß keine gegenseitige Beeinflussung des fließenden Schweißstromes stattfindet. Damit wird sichergestellt, daß eine gleiche Stromverteilung auf die beiden Erhebungen erfolgt und damit auch ein gleichmäßiges Verschmelzen dieser Erhebungen mit dem Kontaktträger gewährleistet ist.

Gemäß einer bevorzugten Ausgestaltung der Erfindung ist jeder Oberelektrode zur Aufbringung der Elektrodenkraft eine Feder zugeordnet. Mit Hilfe derartiger Federn können dann auf besonders einfache Weise

EP 0 371 363 B1

gleich große Elektrodenkräfte erzeugt werden.

Gemäß einer weiteren bevorzugten Ausgestaaltung der Erfindung ist vorgesehen, daß jeder Oberelektrode zur Schweißstromzuführung ein Schweißtransformator zugeordnet ist und daß beide Schweißtransformatoren durch einen gemeinsamen Schweißtakter beaufschlagbar sind. Durch eine derartige Anordnung kann auf besonders einfache Weise eine getrennte Stromzuführung zu den beiden Oberelektroden ohne gegenseitige Beeinflussung realisiert werden.

Im folgenden wird ein Ausführungsbeispiel der Erfindung anhand der Figuren 2 und 3 näher erläutert.

Fig. 2 zeigt in stark vereinfachter schematischer Darstellung, daß das Kontaktteil K und der Kontaktträger Kt so zwischen die feststehende Unterelektrode Ue und zwei eng beieinander geführte Oberelektroden Oe1 und Oe2 eingebracht werden, daß die Schweißraupe Sr1 mit der Elektrodenkraft P1 der Oberelektrode Oe1 gegen den Kontaktträger Kt gedrückt wird, während die Schweißraupe Sr2 mit der Elektrodenkraft P2 der Oberelektrode Oe2 gegen den Kontaktträger Kt gedrückt wird. Die beispielsweise über einen gemeinsamen Stempel Sp und Federn F1 und F2 erzeugten Elektrodenkräfte P1 und P2 sollen dabei zumindest annähernd gleich sein, so daß die beiden in Längsrichtung des Kontaktteiles K verlaufenden Schweißwarzen Sr1 und Sr2 gleich stark angedrückt werden. Hierdurch wird einerseits eine Schräglage des Kontaktteiles K vermieden und andererseits eine Eliminierung eventuell vorhandener Höhentoleranzen der Schweißwarzen Sr1 und Sr2 sichergestellt.

Fig. 3 zeigt, daß die mit Ss1 bezeichnete Stromzuführung zu der Oberelektrode Oe1 und der Unterelektrode Ue von der mit Ss2 bezeichneten Stromzuführung zu der Oberelektrode Oe2 und der Unterelektrode Ue derart getrennt ist, daß eine gegenseitige Beeinflussung des jeweils fließenden Schweißstromes mit Sicherheit ausgeschlossen werden kann. Diese Trennung der Schweißstromzuführungen Ss1 und Ss2 wird im dargestellten Ausführungsbeispiel durch zwei getrennte Schweißtransformatoren Str1 und Str2 erreicht, die von einem gemeinsamen Schweißtakter St beaufschlagt werden. Eine Trennung durch einen gemeinsamen Schweißtransformator mit zwei separaten Sekundärwicklungen wäre ebenfalls möglich.

Durch die konsequente Trennung der Schweißstromzuführungen Ss1 und Ss2 ergibt sich eine in Fig. 3 durch Pfeile aufgezeigte gleiche Stromverteilung Sv auf die beiden Schweißraupen Sr1 und Sr2, die in Verbindung mit den gleich großen Elektrodenkräften P1 und P2 ein gleichmäßiges Verschmelzen dieser Stellen mit dem Material des Kontaktträgers Kt gewährleistet.

Die vorstehend anhand der beiden Schweißraupen Sr1 und Sr2 erläuterten Vorteile des erfindungsgemäßen Verfahrens und der erfindungsgemäßen Vorrichtung können selbstverständlich auch bei anderen schweißseitigen Erhebungen der Kontaktteile K wie z.B. Schweißwarzen oder Schweißrauten erzielt werden.

## Patentansprüche

1. Verfahren zum Aufbringen von Kontaktteilen (K) auf Kontaktträger (Kt) mittels Widerstandsschweißen zwischen zusammengedrückten Ober- und Unterelektroden (Oe, Ue), wobei die Kontaktteile schweißseitig mit zwei im Abstand zueinander angeordneten Erhebungen (Sr1, Sr2) wie Schweißwarzen, Schweißraupen oder Schweißrauten versehen sind,
**dadurch gekennzeichnet,**
daß jede der beiden Erhebungen (Sr1,Sr2) mit einer zugeordneten Oberelektrode (Oe1,Oe2) gleich stark gegen den Kontaktträger (Kt) gedrückt wird und daß der Schweißstrom den beiden Oberelektroden (Oe1,Oe2) getrennt und ohne gegenseitige Beeinflussung zugeführt wird.

2. Vorrichtung zum Aufbringen von Kontaktteilen (K) auf Kontaktträger (Kt) mittels Widerstandsschweißen zwischen zusammengedrückten Ober- und Unterelektroden (Oe, Ue), wobei die Kontaktteile (K) schweißseitig mit zwei im Abstand zueinander angeordneten Erhebungen (Sr1, Sr2) wie Schweißwarzen, Schweißraupen oder Schweißrauten versehen sind,
**dadurch gekennzeichnet,**
daß der Unterelektrode (Ue) zwei eng beieinander geführte Oberelektroden (Oe1,Oe2) gegenüberstehen, daß beide Oberelektroden (Oe1,Oe2) mit einer gleich großen Elektrodenkraft (P1,P2) beaufschlagt sind und daß jeder Oberelektrode (0e1,Oe2) eine separate Schweißstromzuführung (Ss1,Ss2) zugeordnet ist.

3. Vorrichtung nach Anspruch 2,
**dadurch gekennzeichnet,**
daß jeder Oberelektrode (Oe1,Oe2) zur Aufbringung der Elektrodenkraft (P1,P2) eine Feder (F1,F2) zugeordnet ist.

4. Vorrichtung nach Anspruch 2 oder 3,
**dadurch gekennzeichnet,**
daß jeder Oberelektrode (Oe1,Oe2) zur Schweißstromzuführung ein Schweißtransformator (Str1,Str2) zugeordnet ist und daß beide Schweißtransformatoren (Str1,Str2) durch einen gemeinsamen Schweißtakter (St)

3

EP 0 371 363 B1

beaufschlagbt sind.

**Revendications**

1. Procédé de pose de pièces de contact (K) sur des supports de contact (Kt) au moyen d'un soudage électrique par résistance entre des électrodes supérieure (Oe) et inférieure (Ue) rapprochées l'une de l'autre, les pièces de contact étant munies, du côté à souder, de deux proéminences (Sr1, Sr2), comme des bossages de soudure, des chenilles de soudure ou des losanges de soudure, disposées à distance l'une de l'autre, caractérisé,
en ce qu'il consiste à appuyer chacune des deux proéminences (Sr1, Sr2) par une force de même intensité sur les supports de contact (Kt) par sa propre électrode supérieure (Oe1, Oe2) et à envoyer le courant de soudage aux deux électrodes supérieures (Oe1, Oe2) de façon indépendante et sans influence mutuelle.

2. Dispositif de pose de pièces de contact (K) sur des supports de contact au moyen d'un soudage électrique par résistance entre des électrodes supérieure (Oe) et inférieure (Ue) rapprochées l'une de l'autre, les pièces de contact (K) étant munies, du côté à souder, de deux proéminences (Sr1, Sr2), comme des bossages de soudure, des chenilles de soudure ou des losanges de soudure, disposées à distance l'une de l'autre, caractérisé,
en ce que, à l'électrode inférieure (Ue) font face deux électrodes supérieures (Oe1, Oe2) guidées en étant étroitement l'une près de l'autre, en ce que les deux électrodes supérieures (Oe1, Oe2) sont chargées avec une force d'électrode (P1, P2) de même intensité, et en ce qu'à chaque électrode supérieure (Oe1, Oe2) est associée une amenée de courant de soudage (Ss1, Ss2) indépendante.

3. Dispositif suivant la revendication 2,
caractérisé,
en ce qu'à chaque électrode supérieure (Oe1, Oe2) est associé, pour l'application de la force d'électrode (P1, P2), un ressort (F1, F2).

4. Dispositif suivant la revendication 2 ou 3,
caractérisé,
en ce qu'à chaque électrode supérieure (Oe1, Oe2) est associé, pour l'amenée du courant de soudage, un transformateur de soudage (Str1, Str2), et en ce que les deux transformateurs de soudage (Str1, Str2) sont alimentés par un temporisateur synchrone de soudage (St).

**Claims**

1. Method of applying contact parts (K) to contact carriers (Kt) by means of resistance welding between top and bottom electrodes (Oe, Ue) pressed together, the contact parts being provided on the welding side with two prominences (Sr1, Sr2) arranged at a distance from one another, such as welding bosses, welding beads or welding lozenges,
characterised in that
each of the two prominences (Sr1, Sr2) are pressed to the same extent with an allocated top electrode (Oe1, Oe2) against the contact carrier (Kt), and in that the welding current is fed to the top electrodes (Oe1, Oe2) in an isolated manner and without mutual influence.

2. Device for applying contact parts (K) to contact carriers (Kt) by means of resistance welding between top and bottom electrodes (Oe, Ue) pressed together, the contact parts (K) being provided on the welding side with two prominences (Sr1, Sr2) arranged at a distance from one another, such as welding bosses, welding beads or welding lozenges,
characterised in that
two top electrodes (Oe1, Oe2) guided close together face the bottom electrode (Ue), in that both top electrodes (Oe1, Oe2) are acted upon by an electrode force (P1, P2) of the same magnitude, and in that a separate welding-current feed (Ss1, Ss2) is allocated to each top electrode (Oe1, Oe2).

3. Device according to Claim 2,
characterised in that
a spring (F1, F2) is allocated to each top electrode (Oe1, Oe2) for applying the electrode force (P1, P2).

4. Device according to Claim 2 or 3,
characterised in that
a welding transformer (Str1, Str2) is allocated to each top electrode (Oe1, Oe2) for the welding-current feed, and in that both welding transformers (Str1, Str2) are acted upon by a common welding timer (St).

4

# FIG 1

Oe

P

Sr1

K

Sr2

Kt

Ue

# FIG 2

Sp

F1   F2

Oe1   Oe2

P1   P2

Sr1   K   Sr2

Kt

Ue

# FIG 3

St

Str1   Str2

P1   P2

Oe1   Oe2

Sv   K

Sr1   Kt

Sr2   Ue

Ss1   Ss2